# EUROPEAN PATENT SPECIFICATION

(11) **EP 3 106 976 B1**
(45) Date of publication and mention of the grant of the patent: **24.11.2021**
(21) Application number: 16157023.9
(22) Date of filing: 23.02.2016
(51) Int. Cl.: H04N 1/00, H04N 1/21, H04N 1/32, G06F 3/12

(54) **INFORMATION PROCESSING PROGRAM AND INFORMATION PROCESSING APPARATUS**
INFORMATIONSVERARBEITUNGSPROGRAMM UND INFORMATIONSVERARBEITUNGSVORRICHTUNG
PROGRAMME DE TRAITEMENT D'INFORMATIONS ET APPAREIL DE TRAITEMENT D'INFORMATIONS

(30) Priority: 19.06.2015 JP 2015124049
(43) Date of publication of application: 21.12.2016
(73) Proprietor: FUJIFILM Business Innovation Corp., Minato-ku Tokyo (JP)
(72) Inventor: OHTAKE, Yu, Yokohama-shi, Kanagawa (JP)
(74) Representative: Haseltine Lake Kempner LLP

(56) References cited:
- US-A1- 2008 216 155
- US-A1- 2015 062 639
- None

## Description

### BACKGROUND

### (i) Technical Field

The present invention relates to an information processing program and an information processing apparatus.

### (ii) Related Art

Image processing devices, such as a printer, a scanner, a facsimile device, a copier, and a multi-function device (a device that has functions of a printer, a scanner, a copier, etc. in combination), that process images and output the processed images in various formats, such as data and printed matter, are indispensable in modern business scenes.

The image processing devices are drawing attention as one of passages of information leakage from organizations such as companies. In the related art, as countermeasures against information leakage from the image processing devices, the images processed by the image processing devices are retained together with information on a user who issued an instruction on the process and log information such as the processing date and time.

It is impractical to retain log images permanently because the amount of image data is enormous, even if the image data are compressed, and there are a huge number of images processed by the image processing device. Thus, in the related art, a retention period is determined for the log images, and log images whose retention period has expired are deleted from a storage device. In general, the length of the retention period is determined to be constant by the system.

In a case of finding image data which has reached an accumulation time limit, an apparatus disclosed in JP-A-2001-051820 determines the necessity of extending the retention period of time, and for image data for which it is necessary to extend the retention period of time, the apparatus performs an inquiry relating to a requirement of extending the accumulation time limit to an accumulator based on accumulator information attached to the image data. In a case where the accumulator sets a new accumulation time limit in response to the inquiry, the accumulation time limit is changed to a new time limit.

In a case where a retention period of stored image data has elapsed for a predetermined amount of time, an image forming apparatus disclosed in JP-A-2006-352738 reduces image data and re-stores the reduced image data.

An image forming apparatus disclosed in JP-A-2008-085402 allows a user to select one or more files, which are to be changed in its deletion schedule days, from a file list stored in a box, and changes the deletion schedule days of one or more selected files in a batch according to the extension period which is input by the user.

US2008/0216155 discloses an image forming apparatus that is capable of preventing a print data from being leaked even where a user forgets to print out the print data with which an authentication data is attached. The image forming apparatus has: a network interface receiving the print data, the authentication data, and an importance degree data; a hard disk drive storing the print data, the authentication data, and the importance degree data received by the network interface; an operation panel with which the user inputs the authentication data that is used to authenticate the print data; an authentication control unit comparing the authentication data stored in the hard disk drive with the authentication data input by the user; a control comprising a print processing unit controlling print processing of the print data stored in the hard disk drive based on the comparison result; and a time management unit measuring a time for which the print data is stored in the hard disk drive, wherein the control unit deletes the print data based on the importance degree data and the time for which the print data is stored in the hard disk drive.

### SUMMARY

In outputting an image (for example, outputting as data or a printed matter), one or more distribution destinations of the image may be designated. One example thereof is a case where a design drawing is output for the management department of the company and for a company in charge of manufacturing outside the company, respectively. The distributed image may be leaked from the distribution destination, but the risk of the leakage or ease of detecting the leakage (the time required until the leakage is revealed, or the like) is considered different depending on the distribution destination. For example, the leakage risk from the internal departments is considered to be lower than that from the other overseas companies. In a state where the retention period of the image is set to be constant regardless of the risk of each distribution destination, an image with a low leakage risk is stored for a long period, which may result in compressing the data capacity of the retention unit. Contrary to this, an image with a high leakage risk may be deleted early due to the shortage of the data capacity of the retention unit.

An object of the invention is to more reasonably control deleting of an image from a retention unit depending on a distribution destination in comparison with a case where a retention period of the image is constant.

According to an aspect of the present invention, there is provided an information processing program causing a computer to execute a process, the process including: receiving input of a distribution destination for a document; retaining an image in a retention unit in correspondence with information on the distribution destination received by the receiving and information on a retention start time point, the image representing the document; acquiring information on an image retention period corresponding to the distribution destination; and deleting the image retained in the retention unit from the retention unit after the image retention period acquired by the acquiring for the corresponding distribution destination has elapsed since the corresponding retention start time point, wherein the deleting includes regularly determining whether or not to delete the image from the retention unit, and setting intervals of execution of the regular determination to be shorter as a remaining capacity of the retention unit is smaller.

According to the information processing program of this aspect of the present invention, deleting an image from a retention unit can be more reasonably controlled in accordance with the distribution destination in comparison with a case where a retention period of the image is constant. Furthermore, the possibility that a remaining capacity of the retention unit becomes insufficient can be further reduced than a case where a process for deleting an image from the retention unit is performed at a constant period.

In one embodiment, the deleting includes regularly determining whether or not to delete the image from the retention unit, and setting a time interval before a next determination to be shorter as the retention unit contains, at a time point of the determination, a larger number of images whose allowance period is equal to or less than a length determined in advance, the allowance period being a period before the image retention period elapses from the retention start time point.

According to the information processing program of this embodiment, an image whose retention expiration time has expired can be deleted from the retention unit earlier than a case where a process for deleting an image from the retention unit is performed at a constant period.

In one embodiment, the image retention period corresponding to the distribution destination is set to be shorter in a case where the distribution destination is inside an organization to which a distribution source computer belongs than in a case where the distribution destination is outside the organization to which the distribution source computer belongs.

According to the information processing program of this embodiment, an image whose distribution destination is inside an organization with a relatively low leakage risk can be deleted early from the retention unit.

According to another aspect of the present invention, there is provided an information processing apparatus including: a reception unit that receives input of a distribution destination for a document; a retention unit that retains an image, which represents the document, in correspondence with information on the distribution destination received by the reception unit and information on a retention start time point; an acquisition unit that acquires information on an image retention period corresponding to the distribution destination; and a deletion unit that deletes the image retained in the retention unit from the retention unit after the image retention period acquired by the acquisition unit for the corresponding distribution destination has elapsed since the corresponding retention start time point, wherein the deletion unit is configured to regularly determine whether or not to delete the image from the retention unit, and to set intervals of execution of the regular determination to be shorter as a remaining capacity of the retention unit is smaller.

According to the information processing apparatus of this aspect of the present invention, deleting an image from a retention unit can be more reasonably controlled in accordance with the distribution destination in comparison with a case where a retention period of the image is constant.

### BRIEF DESCRIPTION OF THE DRAWINGS

An exemplary embodiment of the present invention will be described in detail based on the following figures, wherein:
Fig. 1 illustrates an example of a system to which control according to an exemplary embodiment is applied;
Fig. 2 illustrates an example of the content of information in distribution instructions;
Fig. 3 illustrates an example of the configuration of a log recording device;
Fig. 4 illustrates an example of information to be stored in a log information storage section;
Fig. 5 illustrates an example of a retention period table;
Fig. 6 illustrates an example of a process procedure performed by a print server;
Fig. 7 illustrates an example of a process procedure performed by a deletion processing section of the log recording device;
Fig. 8 illustrates an example of map information that indicates the group classification of distribution destinations;
Fig. 9 illustrates another example of the process procedure performed by the deletion processing section; and
Fig. 10 illustrates still another example of the process procedure performed by the deletion processing section.

### DETAILED DESCRIPTION

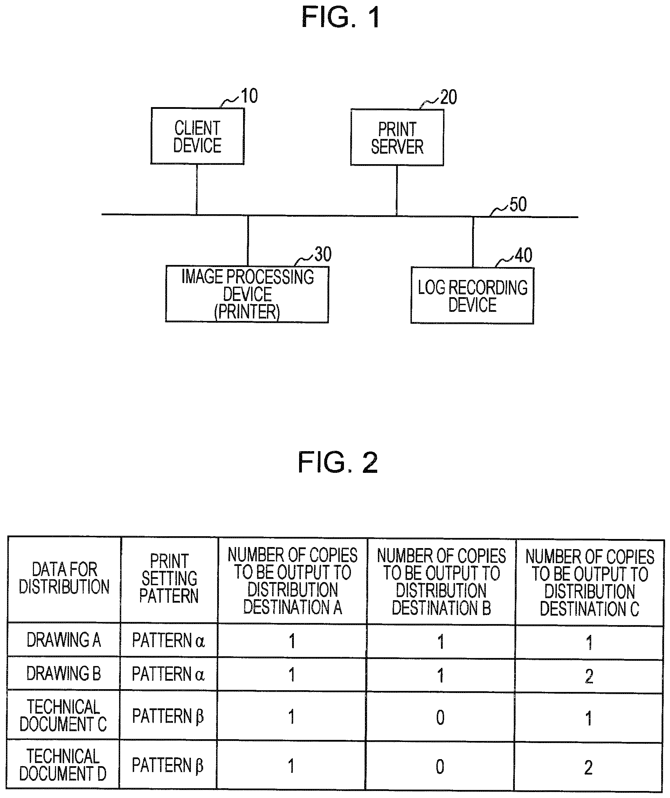

An example of a system configuration according to an exemplary embodiment will be described with reference to Fig. 1. In the following description, a system that prints a document to be distributed is taken as an example. In the following description, in addition, an occasion where documents such as design drawings and technical documents to be distributed to relevant in-house departments and external entities (e.g. cooperative companies and subcontractor companies) are printed is assumed as a specific example of scenes in which the system according to the exemplary embodiment is utilized. It should be noted, however, that this is merely an example for description, and the range of application of the present invention is not limited thereto.

The system includes a client device 10, a print server 20, an image processing device 30, and a log recording device 40. The devices 10 to 40 are connected to a network 50 such as a local area network.

The client device 10 is a device that issues a document distribution (print) instruction to the print server 20 in response to an instruction from a user. The client device 10 is constituted of a personal computer, for example.

An example of the document distribution instruction sent from the client device 10 to the print server 20 is illustrated in Fig. 2. Each row of Fig. 2 indicates information on one distribution instruction (i.e. four distribution instructions are illustrated in Fig. 2). Each of the distribution instructions include information on an identification name (e.g. a file name) that specifies a document to be distributed (data for distribution)corresponding to the instruction, a print setting pattern, and the number of copies of the document to be output to each of distribution destinations. The print setting pattern is information on the print setting for each of the distribution destinations, and includes information such as the paper size and the content of post-processing (such as whether or not to be stapled and how to be bound) for each of the distribution destinations, for example. For example, in the example of Fig. 2, the number of copies of a "technical document C" to be output to a "distribution destination B" is "0". This means that the "technical document C" is not distributed to (and thus not printed at) the "distribution destination B" (but printed at a "distribution destination A" and a "distribution destination C", one copy each).

The user who issues a distribution instruction designates a document to be distributed, designates distribution destinations of the document to be distributed, and designates the number of copies to be distributed to each of the distribution destinations on a setting screen displayed by the client device 10. This causes the client device 10 to generate a distribution instruction for the document, and send the distribution instruction to the print server 20. Designation of distribution destinations may be performed by selecting distribution destinations from candidates for distribution destinations registered in advance in the system (e.g. the print server 20), for example.

The print server 20 executes a process for printing the document to be distributed in accordance with the distribution instruction from the client device 10. For example, the print server 20 converts data on the document to be distributed received from the client device 10 into print data, and sends the print data to the image processing device 30 to cause the image processing device 30 to print the print data.

The image processing device 30 (e.g. a printer) prints the document to be distributed in accordance with an instruction from the print server 20.

The log recording device 40 records log (process history) information on the process performed by the print server 20. For log recording, the print server 20 prepares log information on the processes executed by the print server 20 itself, and transmits the log information to the log recording device 40.

In the system described herein in which the client device 10 issues an instruction to print a drawing or the like, a processing instruction from the user is inevitably sent to the print server 20 to be processed, and thus log information on the processes performed by the print server 20 is recorded. It should be noted, however, that for a system in which the user is assumed to directly issue a processing instruction to the image processing device 30 (e.g. the user is assumed to instruct a multi-function device as the image processing device 30 to copy or fax a document), log information on the processes executed by the image processing device 30 is also recorded in the log recording device 40. In this case, the image processing device 30 prepares log information on the processes executed by the image processing device 30 itself, and transmits the log information to the log recording device 40.

The log information recorded in the log recording device 40 includes information such as the date and time when the process was performed, the user ID (identification information) of the user who issued an instruction on the process, the type of the process (such as print, scan, and facsimile transmission), process parameter information (e.g. the facsimile number or the mail address of the transmission destination), and an image (called "log image") of the processed document. In the exemplary embodiment, information on the distribution destinations for the printed document is recorded as an item of the log information.

The log information (including the log image) recorded in the log recording device 40 is utilized, in the case where a leak of a document printed by the system is revealed, for example, to locate the source of the leak (it should be noted, however, that such usage is merely exemplary).

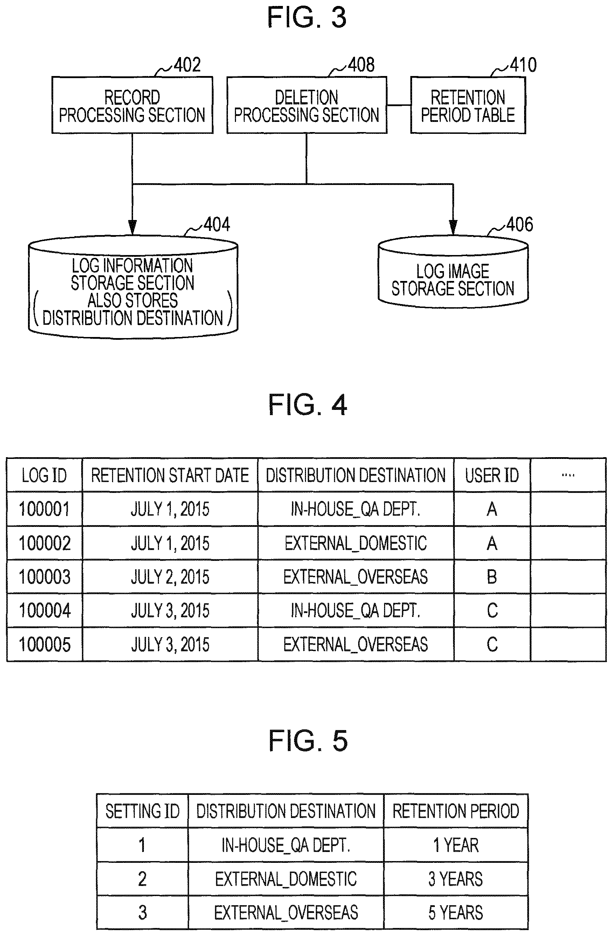

Next, the log recording device 40 will be described in further detail with reference to Fig. 3. The log recording device 40 illustrated in Fig. 3 includes a record processing section 402, a log information storage section 404, a log image storage section 406, a deletion processing section 408, and a retention period table 410.

The record processing section 402 performs a process for storing the log information sent from the print server 20 (and also the log information sent from the image processing device 30 in the case where log recording is performed for the image processing device 30) in the log information storage section 404 and the log image storage section 406. For example, the record processing section 402 provides unique identification information (called "log ID") to the received log information, and registers the log image included in the log information in the log image storage section 406, and registers items other than the log image in the log information storage section 404, each in correspondence with the log ID.

An example of the information to be stored in the log information storage section 404 is illustrated in Fig. 4. In the example, the log information storage section 404 stores, for each log information corresponding to one process, information on items such as the log ID, the retention start date, the distribution destination, and the user ID. The "retention start date" indicates the date when retention of the log image for the process related to the log information was started, which is equivalent to the date (e.g. month, day, and year) of the processing date and time included in the log information received from the print server 20 or the like. In the case where the processing date and time is stored in the log information storage section 404, it is not necessary to separately store the retention start date. The "distribution destination" is information that indicates the distribution destinations for the document related to the log image, that is, information on the distribution destinations included in the log information. The "user ID" indicates the ID of the user who issued an instruction to distribute (print) the document, which is the user ID of the person who issued an instruction for the process included in the log information. Besides, the log information storage section 404 may store information on various items included in the log information from the print server 20. The log image storage section 406 retains the log image included in the log information received from the print server 20 or the like in correspondence with the log ID.

The deletion processing section 408 performs a process for deleting log images which are stored in the log image storage section 406 and whose retention expiration time has expired. In the related art, the length of the retention period of the log image is constant. In the exemplary embodiment, however, the length of the retention period is variable in accordance with the distribution destination for the document related to the log image. For example, the retention period is set to be longer for a distribution destination with a higher risk of leakage, or a distribution destination, for which it takes (or is assumed to take) a longer time before leakage is revealed. For example, as illustrated in Fig. 5 to be discussed later, the retention period may be set to be longer for "external" distribution destinations than for "in-house" distribution destinations, considering that there is a higher risk of leakage for "external" distribution destinations, in which case (computers at) the distribution destinations and (computers at) the distribution source belong to different organizations, than for "in-house" distribution destinations, in which case (computers at) the distribution destinations and (computers at) the distribution source belong to the same organization.

Information on the length of the retention period for each of the distribution destinations is held in the retention period table 410. Fig. 5 illustrates an example of the information held in the retention period table 410. In the example of Fig. 5, the distribution destination and the length of the retention period corresponding to the distribution destination are set in the retention period table 410 in correspondence with a setting ID which is identification information on each record in the table. For example, the retention period of the log image is set to one year for a distribution destination named "in-house_QA Dept."

In determining whether or not the retention expiration time of the log image stored in the log image storage section 406 has expired, the deletion processing section 408 obtains, from the retention period table 410, the retention period corresponding to the distribution destination for the document related to the log image. Then, the deletion processing section 408 calculates the retention expiration time by adding the retention period to the retention start date of the log image, determines whether or not the retention expiration time has expired, and deletes the log image from the log image storage section 406 if the retention expiration time has expired.

Although the log recording device 40 is described as being constituted of a single device in the example, this is not necessary. Constituent elements that compose the log recording device 40 such as the record processing section 402 and the retention period table 410 may be disposed dispersedly on the network in two or more devices, and may implement the processing functions discussed above while communicating with each other by way of the network. In a possible system configuration, for example, plural log recording devices 40 (that do not include the retention period table 410) are provided on the network, and reference a common retention period table 410 on the network.

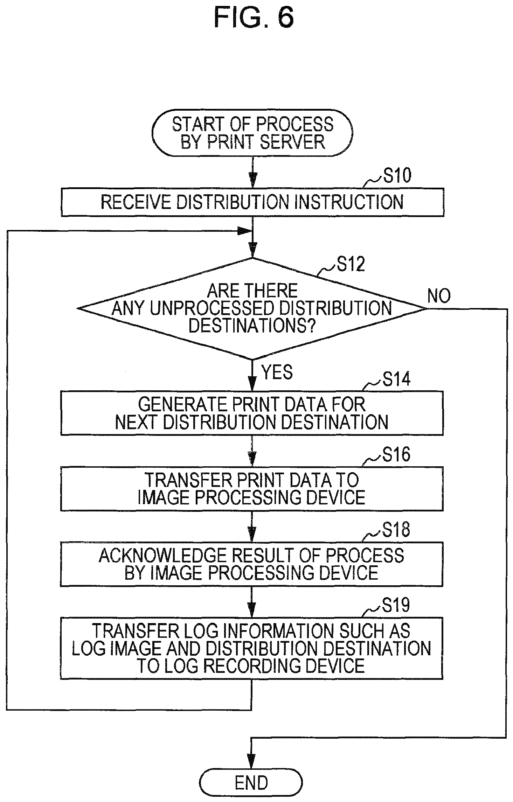

Next, the flow of a process performed by the system according to the exemplary embodiment will be described. First, the flow of a process executed by the print server 20 will be described with reference to Fig. 6.

When the print server 20 receives a distribution instruction from the client device 10 (S10), the process in Fig. 6 is started. In the example, the distribution instruction from the client device 10 includes information such as document data on the document to be distributed, the print setting pattern, and the number of copies to be output to each of the distribution destinations (see Fig. 2).

Next, the print server 20 determines whether or not there are any distribution destinations, for which the process in Fig. 6 is yet to be performed, among the distribution destinations indicated in the received distribution instruction (S12). If there are any distribution destinations for which the process in Fig. 6 is yet to be performed, the print server 20 first generates print data on the distribution destination from the document data on the document to be distributed (S14). For example, the print server 20 generates print data by processing the document data in accordance with the distribution destination. Examples of the processing include writing the name of the distribution destination at a predetermined location on each page of the document data (e.g. in a title field on each page of the design drawing). In the case where the image processing device 30 does not support the data format of the document data, a process for converting the document data into a data format supported by the image processing device 30 (e.g. the format of any page description language) may be executed in S14. Next, the print server 20 transfers the print data for the distribution destination generated in S14 to the image processing device 30 as the output destination together with the number of copies to be output and the other print attributes (prescribed by the print setting pattern) corresponding to the distribution destination (S16). The image processing device 30 performs printing on the basis of the transferred print data in accordance with the print attributes, and responds to the print server 20 with the result of the print process (such as whether successful or unsuccessful). The print server 20 acknowledges the result of the print process sent from the image processing device 30 (S18). In an example, in the case where the result of the print process is successful, the print server 20 transfers log information on the process to the log recording device 40 (S19). The transferred log information includes a log image that indicates the content of an image of the processed document data, information on the distribution destination, and so forth. The data format of the log image is determined in accordance with the requirements for the system. For example, the print data generated in S14 themselves may be recorded as the log image, or image data on the image indicated by the print data or compressed image data obtained by compressing the image data to an image quality level determined in advance may be recorded as the log image. In the example, in the case where the print process performed by the image processing device 30 is unsuccessful, meanwhile, the log image is not recorded, and only the other items of the log information are recorded. In another example, the log image may be recorded (i.e. transferred to the log recording device 40) even in the case where the print process is unsuccessful.

The print server 20 repeatedly performs the processes in S14 to S19 described above for all the distribution destinations with a number of copies to be output being more than zero as designated in the distribution instruction from the client device 10 (S12).

The record processing section 402 of the log recording device 40 receives the log information transmitted from the print server 20 in S19 of Fig. 6, and provides a log ID to the received log information. Then, the log image and the other items included in the log information are retained in the log image storage section 406 and the log information storage section 404, respectively, in correspondence with the log ID.

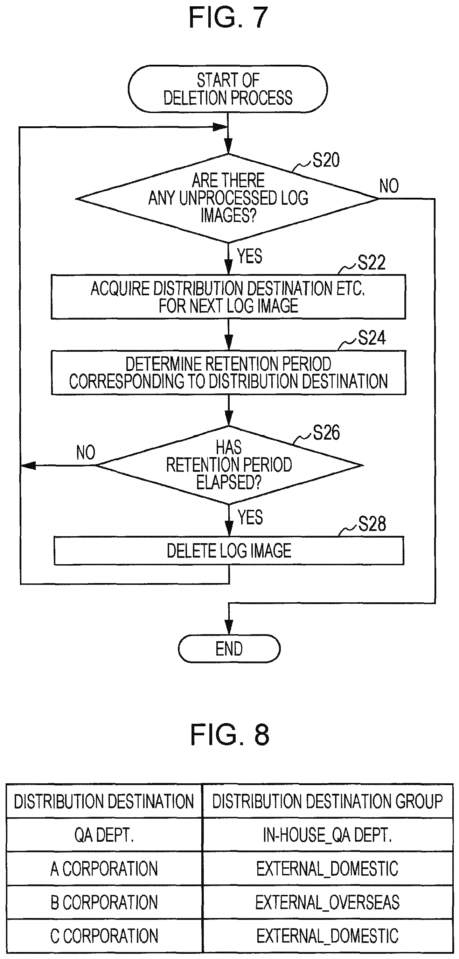

Next, an example of a process procedure performed by the deletion processing section 408 of the log recording device 40 will be described with reference to Fig. 7. The process procedure is executed regularly (e.g. every month), for example.

In the procedure, the deletion processing section 408 determines whether or not there are any log images that have not been subjected to the process in Fig. 7 in the log image storage section 406 (S20). If there are such unprocessed log images, one of the log images is selected as the target to be processed, and information such as the distribution destination and the retention start date corresponding to the log ID of the log image to be processed is acquired from the log information storage section 404 (S22). Next, the deletion processing section 408 obtains, from the retention period table 410, the retention period corresponding to the acquired distribution destination. Further, the retention expiration time of the log image is calculated by adding the retention period to the retention start date, and it is determined whether or not the present date and time is past the retention expiration time (S26). In the case where the present date and time is past the retention expiration time, the log image is deleted from the log image storage section 406 (S28). In this event, log information corresponding to the same log ID as that of the log image may be deleted from the log information storage section 404. After that, the process returns to S20.

In the case where it is determined in S26 that the present date and time is not past the retention expiration time, meanwhile, the process returns to S20 without deleting the log image.

The processes in S22 to S28 described above are repeated for all the log images in the log image storage section 406 (S20).

In the example described above, the retention period is set for each of the distribution destinations (see Figs. 4 and 5). Alternatively, the distribution destinations may be classified into several groups, and the retention period may be set for each of the groups. For example, map information that indicates to which of the groups each of the distribution destinations belongs (see Fig. 8) is stored in the log recording device 40. In this case, the retention period is set for each of the groups in the retention period table 410. The deletion processing section 408 may obtain, from the map information in Fig. 8, a group to which the distribution destination corresponding to the log image belongs, and retrieve the retention period for the obtained group from the retention period table 410.

In the example described above, the deletion processing section 408 regularly executes the deletion process (see Fig. 7). However, the intervals of execution of the deletion process may be variable in accordance with the situation.

For example, the interval before the next deletion process may be set to be shorter as the remaining capacity of the log image storage section 406 is smaller.

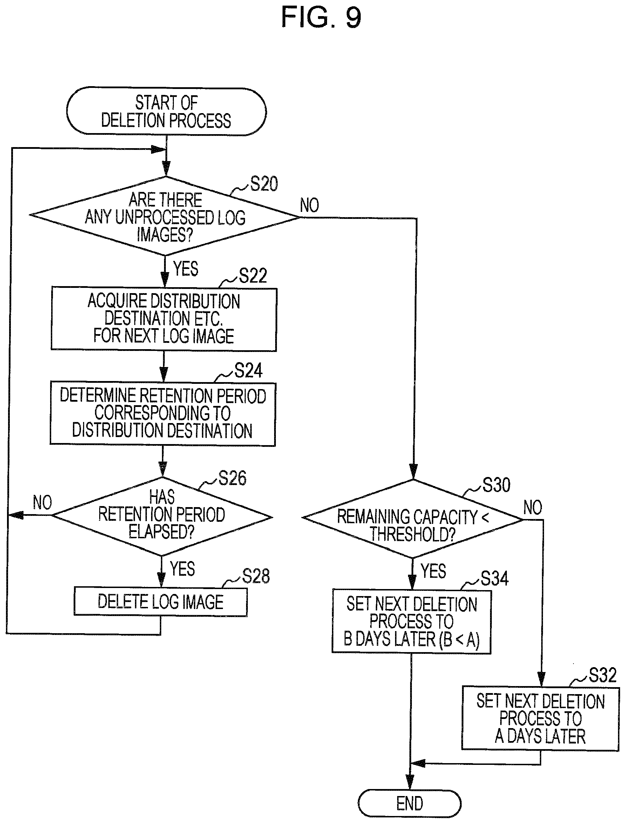

An example of such a process is illustrated in Fig. 9. In Fig. 9, steps that are similar to the steps in the procedure of Fig. 7 are denoted by the same symbols. In the example of Fig. 9, the next date of execution of the deletion process is decided when the deletion processing section 408 performs the deletion process. In the example, after the processes are performed for all the log images in the log image storage section 406 (the result of determination in S20 is No), the deletion processing section 408 determines whether or not the remaining capacity of the log image storage section 406 has fallen below a threshold determined in advance (S30). If the remaining capacity is equal to or more than the threshold (the result of determination in S30 is No), the date that is a reference interval determined in advance (A days) from the present time is set as the next date of execution of the deletion process (S32). In the case where it is determined in S30 that the remaining capacity is less than the threshold, on the other hand, the date that is an interval determined in advance (B days) from the present time is set as the next date of execution of the deletion process, B being less than the reference interval (A days) (S34). After S32 or S34, the sequence of processes is ended.

In the procedure of Fig. 9, there are two stages (A days and B days) in the interval of execution of the deletion process. As a matter of course, however, a larger number of stages may be provided.

In addition, a processing section that is separate from the deletion processing section 408 may monitor the remaining capacity of the log image storage section 406, and the next date of execution of the deletion process may be adjusted in accordance with the obtained remaining capacity (e.g. if the obtained remaining capacity is less than a threshold, the next scheduled date of execution of the deletion process may be brought forward by a predetermined number of days).

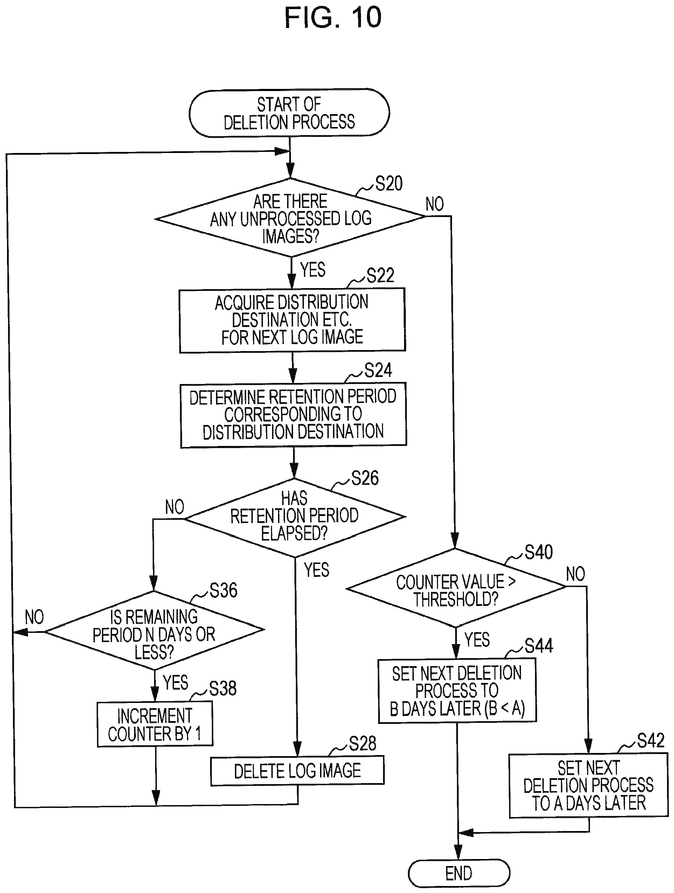

In still another example, the interval before the next deletion process may be set to be shorter as the log image storage section 406 contains a larger number of log images whose retention expiration time is about to expire. An example of such a process is illustrated in Fig. 10. In Fig. 10, steps that are similar to the steps in the procedure of Fig. 7 are denoted by the same symbols.

In the procedure of Fig. 10, in the case where it is determined in S26 that the retention expiration time of the log image selected in S22 has not expired, the deletion processing section 408 determines whether or not the remaining period before the retention expiration time (i.e. the difference between the retention expiration time and the present time) is equal to or less than a threshold determined in advance (N days) (S36). If the remaining period is equal to or less than N days, the value of a counter that indicates the number of log images whose "retention expiration time is about to expire" is incremented by one (S38). Then, the process returns to S20 without deleting the log image. In the case where the result of determination in S36 is No, the process returns to S20 without making any change. Then, after the processes are performed for all the log images in the log image storage section 406 (the result of determination in S20 is No), the deletion processing section 408 determines whether or not the value indicated by the counter is equal to or more than a threshold determined in advance (S40). If the counter value is less than the threshold (the result of determination in S40 is No), the date that is a reference interval determined in advance (A days) from the present time is set as the next date of execution of the deletion process (S42). In the case where it is determined in S40 that the counter value is equal to or more than the threshold, on the other hand, the date that is an interval determined in advance (B days) from the present time is set as the next scheduled date of execution of the deletion process, B being less than the reference interval (A days) (S44). The number of stages in the interval of execution of the deletion process is not limited to two as in the example, and it is a matter of course that a larger number of stages may be provided.

In the example described above, a search is made for the retention period corresponding to the distribution destination for the document to calculate the retention expiration time of the log image using the retention period at the time when the deletion process is executed. In another example, a search may be made for the retention period corresponding to the distribution destination to calculate the retention expiration time at the time when the log image is stored in the log recording device 40, and the retention expiration time may be recorded in correspondence with the log image. In this case, the deletion processing section 408 may delete the log image from the log image storage section 406 simply in the case where the retention expiration time recorded in correspondence with the log image has expired.

In the example described above, the present invention is applied to the log recording device 40 which records a log image together with log information such as the ID of the user who issued an instruction on the process and the type of the process. However, the scheme according to the exemplary embodiment may be applied to any device that records a log image in correspondence with the distribution destination and the retention start date and time, and it is not necessary to record other information items such as the user ID and the process type.

In the example described above, the present invention is applied to a log image for the print process performed by the print server 20. However, the scheme of the exemplary embodiment may also be applied to a deletion process for a log image for other types of processes that involve designation of a distribution destination. For example, control according to the exemplary embodiment may also be applied to a case where a log image for a process in which a scanned image or an image of a document transferred from the client device 10 is transmitted by facsimile or electronic mail, or for a process in which such an image is transferred to a remote folder via a local area network, the Internet, or the like (such processes may be executed by any of the image processing device 30 and the print server 20), is deleted from the log recording device 40.

In the example described above, the present invention is applied to the log recording device 40 which retains a log image. However, control according to the exemplary embodiment discussed above may be applied to any system that retains an image of a document for a designated distribution destination for any purpose, besides the log image.

The print server 20, an information processing apparatus in the image processing device 30, and the log recording device 40 described above are implemented by causing a general-purpose computer to execute a program that represents processes of various functional modules of the devices. Here, the computer has a circuit configuration in which, for example, pieces of hardware such as a microprocessor such as a CPU, a memory (primary storage) such as a random-access memory (RAM) and a read-only memory (ROM), a hard disk drive (HDD) controller that controls an HDD, various input/output (I/O) interfaces, and network interfaces that control connection with a network such as a local area network are connected via a bus, for example. A disk drive that reads data from and/or writes data into a portable disc recording medium such as a CD and a DVD, a memory reader/writer that reads data from and/or writes data into a portable non-volatile recording medium according to various standards such as a flash memory, etc. may be connected to the bus by way of the I/O interfaces, for example. A program that describes the content of processes performed by the functional modules described above is stored in a stationary storage device such as the hard disk drive to be installed on the computer by way of a recording medium such as a CD and a DVD or by way of a communication unit such as a network. The program stored in the stationary storage device is read by the RAM and executed by the microprocessor such as the CPU to implement the group of functional modules described above.

The foregoing description of the exemplary embodiment of the present invention has been provided for the purposes of illustration and description. Obviously, many modifications and variations will be apparent to practitioners skilled in the art. The embodiment was chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

## Claims

1. An information processing program that when executed by an information processing apparatus, causes the information processing apparatus to execute a process, the process comprising:
receiving (S22) input of a distribution destination for a document;
retaining an image in a retention unit in correspondence with information on the distribution destination received and information on a retention start time point, the image representing the document;
acquiring (S24) information on an image retention period corresponding to the distribution destination; and
deleting (S28) the image retained in the retention unit from the retention unit after the image retention period acquired by the acquiring for the corresponding distribution destination has elapsed since the corresponding retention start time point,
wherein the deleting includes regularly determining whether or not to delete the image from the retention unit, and setting intervals of execution of the regular determination to be shorter as a remaining capacity of the retention unit is smaller.

2. The program according to claim 1,
wherein the deleting includes regularly determining whether or not to delete the image from the retention unit, and setting a time interval before a next determination to be shorter as the retention unit contains, at a time point of the determination, a larger number of images whose allowance period is equal to or less than a length determined in advance, the allowance period being a period before the image retention period elapses from the retention start time point.

3. The program according to any one of claims 1 or 2,
wherein the image retention period corresponding to the distribution destination is set to be shorter in a case where the distribution destination is inside an organization to which a distribution source computer belongs than in a case where the distribution destination is outside the organization to which the distribution source computer belongs.

4. An information processing apparatus comprising:
a reception unit (402) that receives input of a distribution destination for a document;
a retention unit (404, 406) that retains an image, which represents the document, in correspondence with information on the distribution destination received by the reception unit and information on a retention start time point;
an acquisition unit (410) that acquires information on an image retention period corresponding to the distribution destination; and
a deletion unit (408) that deletes the image retained in the retention unit from the retention unit after the image retention period acquired by the acquisition unit for the corresponding distribution destination has elapsed since the corresponding retention start time point,
wherein the deletion unit is configured to regularly determine whether or not to delete the image from the retention unit, and to set intervals of execution of the regular determination to be shorter as a remaining capacity of the retention unit is smaller.

## Patentansprüche

1. Informationsverarbeitungsprogramm, das, wenn es von einer Informationsverarbeitungsvorrichtung ausgeführt wird, die Informationsverarbeitungsvorrichtung veranlasst, einen Prozess auszuführen, der Prozess umfassend:
Empfangen (S22) eines Eingangs eines Verteilungsziels für ein Dokument;
Aufbewahren eines Bilds in einer Aufbewahrungseinheit in Übereinstimmung mit Informationen über das empfangene Verteilungsziel und Informationen über einen Aufbewahrungs-Startzeitpunkt, wobei das Bild das Dokument darstellt;
Erfassen (S24) von Informationen über einen Bildaufbewahrungszeitraum entsprechend dem Verteilungsziel; und
Löschen (S28) des in der Aufbewahrungseinheit aufbewahrten Bilds aus der Aufbewahrungseinheit, nachdem der Bildaufbewahrungszeitraum, der durch das Erfassen für das entsprechende Verteilungsziel erfasst wurde, seit dem entsprechenden Aufbewahrungs-Startzeitpunkt verstrichen ist,
wobei das Löschen ein regelmäßiges Bestimmen, ob das Bild aus der Aufbewahrungseinheit gelöscht werden soll, und ein Einstellen von Ausführungsintervallen der regelmäßigen Bestimmung, sodass sie kürzer sind, wenn eine verbleibende Kapazität der Aufbewahrungseinheit kleiner wird, beinhaltet.

2. Programm gemäß Anspruch 1,
wobei das Löschen ein regelmäßiges Bestimmen, ob das Bild aus der Aufbewahrungseinheit gelöscht werden soll, und ein Einstellen eines Zeitintervalls vor einer nächsten Bestimmung, sodass es kürzer ist, wenn die Aufbewahrungseinheit zu einem Zeitpunkt der Bestimmung eine größere Anzahl von Bildern enthält, deren Erlaubniszeitraum gleich wie oder kleiner als eine im Voraus bestimmte Länge ist, wobei der Erlaubniszeitraum ein Zeitraum ist, bevor der Bildaufbewahrungszeitraum ab dem Aufbewahrungs-Startzeitpunkt abläuft.

3. Programm gemäß einem der Ansprüche 1 oder 2,
wobei der Bildaufbewahrungszeitraum, der dem Verteilungsziel entspricht, eingestellt ist, um in einem Fall, in dem das Verteilungsziel innerhalb einer Organisation ist, zu der ein Verteilungsquellencomputer gehört, kürzer ist als in einem Fall, in dem das Verteilungsziel außerhalb der Organisation ist, zu der der Verteilungsquellencomputer gehört.

4. Informationsverarbeitungsvorrichtung, umfassend:
eine Empfangseinheit (402), die einen Eingang eines Verteilungsziels für ein Dokument empfängt;
eine Aufbewahrungseinheit (404, 406), die ein Bild, das das Dokument darstellt, in Übereinstimmung mit Informationen über das Verteilungsziel, die von der Empfangseinheit empfangen werden, und Informationen über einen Aufbewahrungs-Startzeitpunkt aufbewahrt;
eine Erfassungseinheit (410), die Informationen über einen Bildaufbewahrungszeitraum erfasst, der dem Verteilungsziel entspricht; und
eine Löscheinheit (408), die das in der Aufbewahrungseinheit aufbewahrte Bild aus der Aufbewahrungseinheit löscht, nachdem der von der Erfassungseinheit für das entsprechende Verteilungsziel erfasste Bildaufbewahrungszeitraum seit dem entsprechenden Aufbewahrungs-Startzeitpunkt verstrichen ist,
wobei die Löscheinheit konfiguriert ist, um regelmäßig zu bestimmen, ob das Bild aus der Aufbewahrungseinheit gelöscht werden soll, und um Ausführungsintervalle der regelmäßigen Bestimmung einzustellen, sodass sie kürzer sind, wenn eine verbleibende Kapazität der Aufbewahrungseinheit kleiner wird.

## Revendications

1. Un programme de traitement d'informations qui, lorsqu'il est exécuté par un appareil de traitement d'informations, amène l'appareil de traitement d'informations à exécuter un procédé, le procédé comprenant :
la réception (S22) d'une entrée d'une destination de distribution pour un document ;
la conservation d'une image dans une unité de conservation en correspondance avec des informations sur la destination de distribution reçues et des informations sur un point temporel de début de conservation, l'image représentant le document ;
l'acquisition (S24) d'informations sur une période de conservation d'image correspondant à la destination de distribution ; et
la suppression (S28) de l'image conservée dans l'unité de conservation de l'unité de conservation après que la période de conservation d'image acquise par l'acquisition pour la destination de distribution correspondante se soit écoulée depuis le point temporel de début de conservation correspondant,
dans lequel la suppression comprend la détermination régulière de la suppression ou non de l'image de l'unité de conservation, et le réglage des intervalles d'exécution de la détermination régulière pour qu'ils soient plus courts lorsqu'une capacité restante de l'unité de conservation est plus petite.

2. Le programme selon la revendication 1,
dans lequel la suppression comprend la détermination régulière de la suppression ou non de l'image de l'unité de conservation, et le réglage d'un intervalle de temps avant une détermination suivante pour qu'il soit plus court car l'unité de conservation contient, à un point temporel de la détermination, un plus grand nombre d'images dont la période de tolérance est égale ou inférieure à une longueur déterminée à l'avance, la période de tolérance étant une période avant que la période de conservation d'image ne s'écoule depuis le point temporel de début de conservation.

3. Le programme selon l'une quelconque des revendications 1 ou 2,
dans lequel la période de conservation d'image correspondant à la destination de distribution est définie pour être plus courte dans un cas où la destination de distribution est à l'intérieur d'une organisation à laquelle un ordinateur source de distribution appartient que dans un cas où la destination de distribution est à l'extérieur de l'organisation à laquelle l'ordinateur source de distribution appartient.

4. Un appareil de traitement d'informations comprenant :
une unité de réception (402) qui reçoit une entrée d'une destination de distribution pour un document ;
une unité de conservation (404, 406) qui conserve une image, qui représente le document, en correspondance avec des informations sur la destination de distribution reçues par l'unité de réception et des informations sur un point temporel de début de conservation ;
une unité d'acquisition (410) qui acquiert des informations sur une période de conservation d'image correspondant à la destination de distribution ; et
une unité de suppression (408) qui supprime l'image conservée dans l'unité de conservation de l'unité de conservation après que la période de conservation d'image acquise par l'unité d'acquisition pour la destination de distribution correspondante se soit écoulée depuis le point temporel de début de conservation correspondant,
dans lequel l'unité de suppression est configurée pour déterminer régulièrement s'il faut ou non supprimer l'image de l'unité de conservation, et pour régler les intervalles d'exécution de la détermination régulière pour qu'ils soient plus courts lorsqu'une capacité restante de l'unité de conservation est plus petite.
